# EUROPÄISCHE PATENTANMELDUNG

(11) **EP 1 739 655 A2**
(43) Veröffentlichungstag der Anmeldung: **03.01.2007**
(21) Anmeldenummer: 06112755.1
(22) Anmeldetag: 19.04.2006
(51) Int. Cl.: G10L 15/22

(54) **Verfahren zur Ermittlung einer Hypothesenliste aus einem Vokabular eines Spracherkennungssystems**

(30) Priorität: 29.06.2005 DE 102005030380
(71) Anmelder: SIEMENS AKTIENGESELLSCHAFT, 80333 München (DE)
(72) Erfinder: Heidenreich, Sabine, 85579 Neubiberg (DE); Kunstmann, Niels, 85540 Haar (DE)

(57) **Zusammenfassung**

Der vorliegenden Erfindung liegt die Aufgabe zugrunde, ein Verfahren zur Ermittlung einer Hypothesenliste aus einem Vokabular eines Spracherkennungssystems anzugeben, durch das eine sichere und schnelle Anwendung durch einen Benutzer ermöglicht wird. Diese Aufgabe wird dadurch gelöst, dass zur Ermittlung einer Hypothesenliste aus einem Vokabular eines Spracherkennungssystems durch einen Benutzer ein zu erkennendes Wort anbuchstabiert wird. Abstandsmaße für eine Ähnlichkeit zwischen der erkannten Buchstabenfolge und Einträgen des Vokabulars des Spracherkennungssystems werden ermittelt. Anschließend erfolgt eine der folgenden Maßnahmen: Wenn Differenzen zwischen einer Anzahl ermittelter Abstandsmaße einen vorgebbaren ersten Wert unterschreiten, erfolgt eine Aufforderung durch das Spracherkennungssystems an den Benutzer, die Buchstabierung des zu erkennenden Wortes fortzusetzen. Wenn ein vorgebbares Abstandsmaß einen vorgebbaren zweiten Wert überschreitet, erfolgt eine Aufforderung durch das Spracherkennungssystem an den Benutzer, die Anbuchstabierung des zu erkennenden Wortes zu wiederholen. Wenn Differenzen zwischen einer Anzahl ermittelter Abstandsmaße den vorgebbaren ersten Wert überschreiten und/oder ein vorgebbares Abstandsmaß den vorgebbaren zweiten Wert unterschreitet, wird eine Hypothesenliste mit den ermittelten Einträgen dem Benutzer auf einem Anzeigemittel zur Auswahl dargestellt.

## Beschreibung

Die vorliegende Erfindung betrifft ein Verfahren und ein Computerprogrammprodukt zur Ermittlung einer Hypothesenliste aus einem Vokabular eines Spracherkennungssystems.

Spracherkennungssysteme, die einzelne Wörter oder Wortketten aus einem vorgebbaren Vokabular erkennen können, werden üblicherweise zur Bedienung von Telefonapparaten oder von nicht sicherheitsrelevanten Komponenten der Ausstattung eines Kraftfahrzeugs durch gesprochene Kommandos benutzt. Weitere bekannte Beispiele betreffen die Bedienung von Operationsmikroskopen durch den operierenden Arzt und die Bedienung von Personalcomputern.

Bei der Bedienung eines Autonavigationssystems kann beispielsweise ein gewünschter Zielort durch Spracheingabe mitgeteilt werden. Eine besondere Herausforderung stellt dabei die Eingabe von Ortsnamen dar. In Deutschland gibt es zwischen 70.000 und 80.000 Orte, die als Ziel einer Autofahrt in Frage kommen. Die Lösung dieser Aufgabe mit einer Einzelworterkennung stellt wegen der fehlenden Kontextinformation eine immens hohe Anforderung an die Technologie des Spracherkennungssystems dar. Aus diesem Grund, aber auch zur Eingabe von Städtenamen, deren korrekte Aussprache dem Benutzer nicht bekannt ist, wie beispielsweise im Ausland, bieten sich Buchstabierlösungen an, bei denen der Benutzer aufgefordert wird, die ersten Buchstaben des gewünschten Zielortes zu sprechen.

In einem solchen Verfahren teilt ein Anwender einen Zielort dem Navigationssystem durch Anbuchstabieren mit. Anhand der erkannten Buchstabenfolge werden durch das Navigationssystem aus der Menge aller Orte diejenigen bestimmt, deren Anfangsbuchstaben der erkannten Buchstabenfolge ähneln. In einer Auswahlliste werden die Orte der Ähnlichkeit nach geordnet, dem Benutzer zur weiteren Auswahl angeboten. Der Anwender kann anschließend wieder per Spracheingabe oder über eine Tastatur den gewünschten Zielort angeben.

Nachteilig bei diesem Verfahren ist, dass durch das System für eine eingegebene Buchstabenfolge eine große Anzahl von Einträgen in dem Vokabular des Spracherkennungssystems mit einer entsprechenden Ähnlichkeit identifiziert werden, und somit dem Benutzer nur eine sehr lange Hypothesenliste zur Auswahl vorgelegt werden kann. Erkennt der Benutzer dann, dass die Anzahl der von ihm gesprochenen Buchstaben offensichtlich noch nicht ausreicht, bleibt ihm nur übrig, durch erneutes Drücken einer so genannten Push-to-Talk-Taste die Erkennung erneut zu starten und eine größere Anzahl von Buchstaben zu sprechen.

Der vorliegenden Erfindung stellt sich somit die Aufgabe, ein Verfahren zur Ermittlung einer Hypothesenliste aus einem Vokabular eines Spracherkennungssystems anzugeben, durch das eine sichere und schnelle Anwendung durch einen Benutzer ermöglicht wird.

Erfindungsgemäß wird diese Aufgabe durch ein Verfahren und ein Computerprogrammprodukt mit den in Anspruch 1 und Anspruch 9 angegebenen Merkmalen gelöst. Vorteilhafte Weiterbildungen der vorliegenden Erfindung sind in den abhängigen Ansprüchen angegeben.

Entsprechend der vorliegenden Erfindung wird in einem Verfahren zur Ermittlung einer Hypothesenliste aus einem Vokabular eines Spracherkennungssystems durch einen Benutzer ein zu erkennendes Wort anbuchstabiert. Abstandsmaße für eine Ähnlichkeit zwischen der erkannten Buchstabenfolge und Einträgen des Vokabulars des Spracherkennungssystems werden ermittelt. Anschließend erfolgt eine der folgenden Maßnahmen: Wenn Differenzen zwischen einer Anzahl ermittelter Abstandsmaße einen vorgebbaren ersten Wert unterschreiten, erfolgt eine Aufforderung durch das Spracherkennungssystems an den Benutzer, die Buchstabierung des zu erkennenden Wortes fortzusetzen. Wenn ein vorgebbares Abstandsmaß einen vorgebbaren zweiten Wert überschreitet, erfolgt eine Aufforderung durch das Spracherkennungssystem an den Benutzer, die Anbuchstabierung des zu erkennenden Wortes zu wiederholen. Wenn Differenzen zwischen einer Anzahl ermittelter Abstandsmaße den vorgebbaren ersten Wert überschreiten und/oder ein vorgebbares Abstandsmaß den vorgebbaren zweiten Wert unterschreitet, wird eine Hypothesenliste mit den ermittelten Einträgen dem Benutzer auf einem Anzeigemittel zur Auswahl dargestellt. Durch das erfindungsgemäße Verfahren wird somit in vorteilhafter Weise eine Heuristik vorgeschlagen, die steuert, ob durch das Spracherkennungssystems dem Benutzer eine Fortsetzung der Buchstabierung, ein Wiederholen der Buchstabierung oder eine Auswahlliste angeboten wird. Hierdurch ist eine Suche durch den Benutzer in einer langen Hypothesenliste nicht mehr erforderlich und damit weniger zeitintensiv. Eine Eingabe eines gewünschten Zielortes kann also durch einen Benutzer sehr viel schneller und sicherer vorgenommen werden, da er durch die Eingabe weniger beansprucht bzw. abgelenkt wird.

Gemäß einer vorteilhaften Ausgestaltung der vorliegenden Erfindung werden zur Ermittlung von Abstandsmaßen für eine Ähnlichkeit zwischen der erkannten Buchstabenfolge und Einträgen des Vokabulars Abstandswerte für eine Ähnlichkeit zweier Buchstaben ermittelt. Für das Abstandsmaß werden die Abstandwerte für jeweils einen Buchstaben der Buchstabenfolge und einen korrespondierenden Buchstaben des entsprechenden Eintrages zusammengezählt. Dies ist nur eine Möglichkeit zur Ermittlung von Abstandsmaßen für eine Ähnlichkeit zwischen der erkannten Buchstabenfolge und Einträgen des Vokabulars.

Eine weitere Möglichkeit ein Abstandsmaß für die Ähnlichkeit zwischen der erkannten Buchstabenfolge und Einträgen des Vokabulars zu ermitteln ist die Verwendung eines Levensteinabstandes als Abstandsmaß, beispielsweise unter der Nebenbedingung, dass das Buchstabieren mitten im Wort abbrechen darf.

Der Levensteinabstand ist ein Maß für den Unterschied zwischen zwei Zeichenketten als minimaler Anzahl atomarer Veränderungen, die notwendig sind, um die erste Zeichenkette in die zweite Zeichenkette umzuformen. Atomare Veränderungen sind beispielsweise das Einfügen, das Löschen und das Ersetzen eines einzelnen Buchstabens. Üblicherweise ordnet man den atomaren Veränderungen Kosten zu und erhält somit durch Zusammenzählen der einzelnen Kosten ein Maß für den Abstand bzw. die Ähnlichkeit zweier Zeichenketten.

Gemäß einer weiteren vorteilhaften Ausgestaltung der vorliegenden Erfindung werden neben der Hypothesenliste auch die erkannten Buchstaben auf dem Anzeigemittel dargestellt. Dadurch kann dem Benutzer in vorteilhafter Weise eine Rückmeldung gegeben werden, wie viele Buchstaben und gegebenenfalls bei einer optionalen Weiterbildung der vorliegenden Erfindung durch ein vorgebbares Symbol gekennzeichnet, mit welcher Zuverlässigkeit ein Buchstabe erkannt wurde.

Bei der Ausführung des erfindungsgemäßen Computerprogrammprodukts wird durch die Programmablaufsteuerungseinrichtung zur Ermittlung einer Hypothesenliste aus einem Vokabular eines Spracherkennungssystems ein durch einen Benutzer anbuchstabiertes zu erkennendes Wort erkannt. Abstandsmaße für eine Ähnlichkeit zwischen der erkannten Buchstabenfolge und Einträgen des Vokabulars des Spracherkennungssystems werden ermittelt. Schließlich wird eine der folgenden Maßnahmen ergriffen: Wenn Differenzen zwischen einer Anzahl ermittelter Abstandsmaße einen vorgebbaren ersten Wert unterschreiten, erfolgt eine Aufforderung durch das Spracherkennungssystem an den Benutzer, die Buchstabierung des zu erkennenden Wortes fortzusetzen. Wenn ein vorgebbares Abstandsmaß einen vorgebbaren zweiten Wert überschreitet, erfolgt eine Aufforderung durch das Spracherkennungssystem an den Benutzer, die Anbuchstabierung des zu erkennenden Wortes zu wiederholen. Wenn Differenzen zwischen einer Anzahl ermittelter Abstandsmaße den vorgebbaren ersten Wert überschreiten und/oder ein vorgebbares Abstandsmaß den vorgebbaren zweiten Wert unterschreitet, wird eine Hypothesenliste mit den ermittelten Einträgen dem Benutzer auf einem Anzeigemittel zur Auswahl dargestellt.

Die vorliegende Erfindung wird nachfolgend an einem Ausführungsbeispiel anhand der Zeichnungen näher erläutert. Es zeigt:
- Figur 1: eine schematische Darstellung drei möglicher Alternativen für einen Verlauf einer Interaktion zwischen einem Spracherkennungssystem und einem Benutzer,
- Figur 2: eine schematische Darstellung eines Verfahrensablaufs zur Ermittlung einer Hypothesenliste aus einem Vokabular eines Spracherkennungssystems.

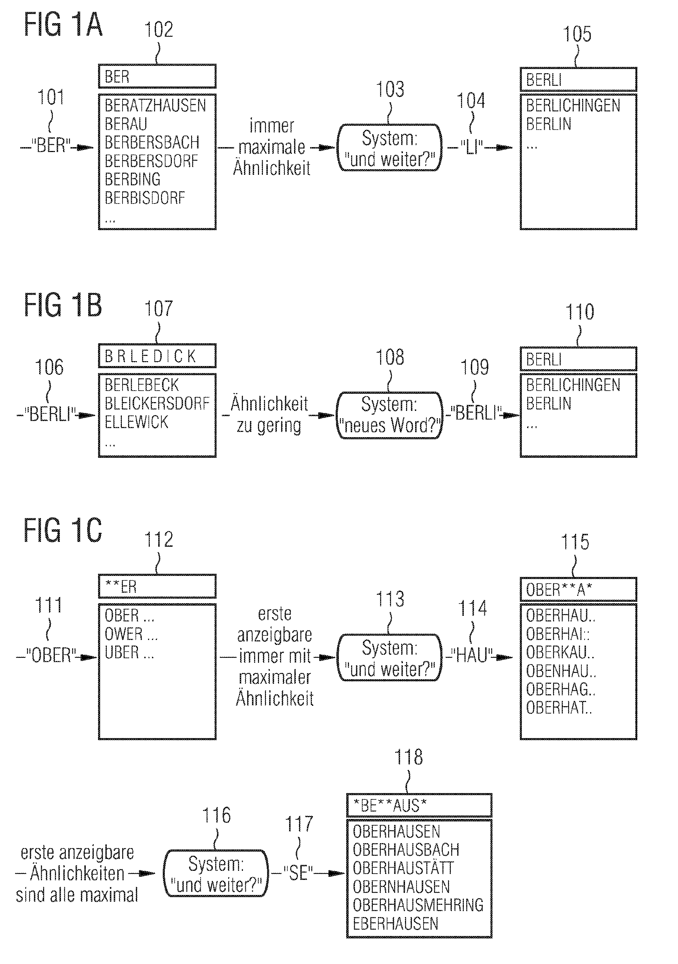

Als ein Ausführungsbeispiel der vorliegenden Erfindung zeigt die Figur 1a den Verlauf einer Interaktion zwischen dem Spracherkennungssystem und dem Benutzer, wenn sich viele Wörter in der Hypothesenliste in der Ähnlichkeit zur erkannten Buchstabenfolge kaum unterscheiden. Ein Benutzer, der in diesem Beispiel den Zielort Berlin eingeben möchte, spricht die Buchstaben "BER" 101. Das Spracherkennungssystem erkennt die Buchstabenfolge BER und stellt eine Hypothesenliste der mit dieser Buchstabenfolge gefundenen Einträge aus dem Vokabular 102 dar. Da sich die einzelnen Einträge aus der Hypothesenliste in ihren Ähnlichkeiten zu der Buchstabenfolge kaum unterscheiden, erfolgt durch das System die Aufforderung an den Benutzer, die Buchstabierung fortzusetzen 103. Hierauf spricht der Benutzer zusätzlich die Buchstaben "LI" 104 in das System ein. Aufgrund der erkannten Buchstabenfolge BERLI stellt das Spracherkennungssystem eine neue Hypothesenliste zusammen 105, die wesentlich kürzer und damit übersichtlicher für den Benutzer ist.

Die Figur 1b zeigt einen möglichen Verlauf einer Interaktion zwischen dem Spracherkennungssystem und dem Benutzer, wenn kein einziger Eintrag aus der Hypothesenliste eine ausreichende Ähnlichkeit zu einer erkannten Buchstabenfolge aufweist. Ein Benutzer, der als Zielort Berlin eingeben möchte, spricht als Buchstabenfolge "BERLI" 106 in das System ein. Durch das Spracherkennungssystem wird die Buchstabenfolge BRLEDICK erkannt und eine aus dieser falsch erkannten Buchstabenfolge abgeleitete Hypothesenliste dargestellt 107. Durch das System wird festgestellt, dass die Ähnlichkeit des Eintrags aus der Hypothesenliste mit dem besten Ähnlichkeitsmaß immer noch nicht ausreichend ist. Daher erfolgt durch das Spracherkennungssystem eine Aufforderung an den Benutzer, die Eingabe der Buchstabenfolge zu wiederholen 108. Der Benutzer gibt die Buchstabenfolge "BERLI" 109 erneut in das System ein. Das System stellt nur auf Grundlage der richtig erkannten Buchstabenfolge BERLI eine neue und wesentlich kürzere Hypothesenliste zusammen 110. Hierdurch kann eine falsch erkannte Buchstabenfolge korrigiert werden, wobei das Verfahren auch durch die Einbeziehung einer akustischen Genauigkeit der Buchstabiererkennung erweitert werden kann, um eine Fehlerkennung durch starkes Hintergrundrauschen oder Nebengeräusche frühzeitig zu erkennen.

Figur 1c zeigt den Verlauf einer Interaktion zwischen dem Spracherkennungssystem und dem Benutzer, wenn sehr viele unterschiedliche Buchstaben eine hohe Ähnlichkeit zur erkannten Buchstabenfolge aufweisen. Ein Benutzer, der nach Oberhausen möchte, spricht als Buchstabenfolge "OBER" 111 in das System ein. Das Spracherkennungssystem identifiziert für den eingesprochenen Buchstaben O die phonetisch ähnlichen Buchstaben O und U und führt den eingesprochenen Buchstaben B die phonetisch ähnlichen Buchstaben B und W. Dies wird durch das System mit einem Sternsymbol gekennzeichnet 112. Aufgrund der großen Ähnlichkeit zwischen den Einträgen in der Hypothesenliste, erfolgt durch das Spracherkennungssystem eine Aufforderung die Buchstabierung fortzusetzen 113. Hierauf spricht der Benutzer die Buchstabenfolge "HAU" in das System ein 114. Durch die zusätzlichen Informationen identifiziert das System die Buchstaben O und B nun eindeutig, während dessen nun die Buchstaben R, H und U nicht mehr eindeutig erkannt werden 115. Wiederum ergeht eine Aufforderung an den Benutzer die Buchstabierung fortzusetzen 116. Nach Eingabe der Buchstaben "SE" 117 durch den Benutzer, wird durch das System nun eine Hypothesenliste 118 zusammengestellt, die als ersten Eintrag den gewünschten Zielort enthält.

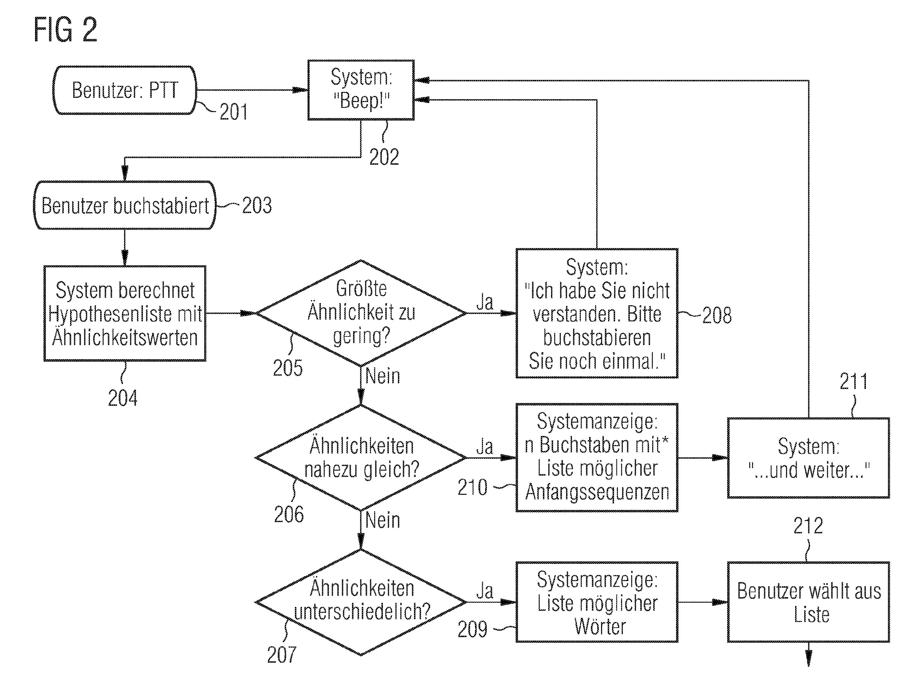

Als weiteres Ausführungsbeispiel zeigt die Figur 2 einen möglichen Ablauf eines Verfahrens zur Ermittlung einer Hypothesenliste aus einem Vokabular eines Spracherkennungssystems. Ein Benutzer startet die Buchstabiererkennung 201 entweder durch Drücken einer Push-to-Talk-Taste im entsprechenden Eingabedialog oder die Eingabe ergibt sich direkt durch den vorherigen Dialogschritt. Das Spracherkennungssystem signalisiert beispielsweise durch einen "Beep" 202 die Aufnahmebereitschaft für eine Buchstabenfolge. Der Benutzer buchstabiert die ersten Buchstaben des gewünschten Zielortes oder der gewünschten Zielstadt 203. Die Erfindung ist nicht nur auf die sprachliche Eingabe von Navigationszielen beschränkt, sondern kann für jede Buchstabieraufgabe verwendet werden. Dies könnte beispielsweise auch bei einem Adressbuch für ein mobiles Kommunikationsgerät der Fall sein. Das System berechnet eine Hypothesenliste von Worten des Vokabulars zusammen mit ihren Ähnlichkeiten zu der erkannten Buchstabenfolge 204. Wenn die Ähnlichkeit der besten Hypothese zu gering ist, obwohl die rein akustische Buchstabenerkennung ausreichend war, liegt eine Fehleingabe, bedingt etwa durch starke Hintergrundgeräusche oder Hineinsprechen des Beifahrers, vor, oder die Erkennung war aus anderem Grunde mangelhaft 205. Wenn die Ähnlichkeiten sehr vieler Hypothesen nahezu gleich sind, ist die Anzahl der gesprochenen Buchstaben nicht ausreichend 206. Wenn die einzelnen Hypothesen sich in der Ähnlichkeit zur erkannten Buchstabenfolge in ausreichendem Maße unterscheiden, ist demnach der Raum der Hypothesen bezüglich ihrer Ähnlichkeit zur erkannten Folge recht dünn besiedelt, entscheidet das System, dass die Anzahl der Buchstaben ausreichend ist 207.

Falls die Ähnlichkeiten zu gering sind, wird dem Benutzer ein Neustart des Buchstabiervorgangs nahe gelegt 208. Ist der Unterschied zwischen den Ähnlichkeiten der einzelnen Einträge ausreichend, zeigt das System die konventionelle Auswahlliste an 209. Optional zeigt das System in der ersten Zeile die hypothetisierte Folge von Buchstaben an. Buchstaben, die nicht eindeutig erkannt wurden oder für die in den Einträgen des Vokabulars für diese Stelle mehrere ähnliche Buchstaben vorliegen, werden durch ein Sondersymbol "*" dargestellt. In der Liste werden in diesem Beispiel die besten erkannten Anfangssequenzen dargestellt 210. Sind die Ähnlichkeiten zwischen den Einträgen der Hypothesenliste nahezu gleich, fordert das System den Benutzer zum Weiterbuchstabieren auf 211. Aus der am Ende des Verfahrens dargestellten Hypothesenliste wählt der Benutzer in konventioneller Form aus der Liste seinen gewünschten Zielort aus 212, sei es durch sprachliche Eingabe der Zeilennummer oder durch haptische Auswahl.

Die vorliegende Erfindung ist nicht auf die hier beschriebenen Ausführungsbeispiele beschränkt.

## Patentansprüche

1. Verfahren zur Ermittlung einer Hypothesenliste aus einem Vokabular eines Spracherkennungssystems, bei dem durch einen Benutzer ein zu erkennendes Wort anbuchstabiert wird und Abstandsmaße für eine Ähnlichkeit zwischen der erkannten Buchstabenfolge und Einträgen des Vokabulars des Spracherkennungssystems ermittelt werden, wobei eine der folgenden Maßnahmen erfolgt,
- wenn Differenzen zwischen einer Anzahl ermittelter Abstandsmaße einen vorgebbaren ersten Wert unterschreiten, eine Aufforderung durch das Spracherkennungssystem an den Benutzer erfolgt, die Buchstabierung des zu erkennenden Wortes fortzusetzen,
- wenn ein vorgebbares Abstandsmaß einen vorgebbaren zweiten Wert überschreitet, eine Aufforderung durch das Spracherkennungssystem an den Benutzer erfolgt, die Anbuchstabierung des zu erkennenden Wortes zu wiederholen,
- wenn Differenzen zwischen einer Anzahl ermittelter Abstandsmaße den vorgebbaren ersten Wert überschreiten und/oder ein vorgebbares Abstandsmaß den vorgebbaren zweiten Wert unterschreitet, eine Hypothesenliste mit den ermittelten Einträgen dem Benutzer auf einem Anzeigemittel zur Auswahl dargestellt wird.

2. Verfahren nach Anspruch 1, wobei zur Ermittlung von Abstandsmaßen für eine Ähnlichkeit zwischen der erkannten Buchstabenfolge und Einträgen des Vokabulars, Abstandswerte für eine Ähnlichkeit zweier Buchstaben ermittelt werden, für das Abstandsmaß die Abstandswerte für jeweils einen Buchstaben der Buchstabenfolge und einen korrespondierenden Buchstaben des entsprechenden Vokabulareintrags zusammengezählt werden.

3. Verfahren nach Anspruch 2, wobei Abstandswerte für eine phonetische Ähnlichkeit zweier Buchstaben ermittelt werden.

4. Verfahren nach einem der vorhergehenden Ansprüche, bei dem als Abstandsmaß ein Levensteinabstand herangezogen wird.

5. Verfahren nach einem der vorhergehenden Ansprüche, bei dem neben der Hypothesenliste auch die erkannten Buchstaben auf dem Anzeigemittel dargestellt werden.

6. Verfahren nach Anspruch 5, bei dem nicht eindeutig erkannte Buchstaben oder Buchstaben, für die an der jeweiligen Stelle ähnliche Buchstaben im Vokabular vorliegen, durch ein vorgebbares Symbol **gekennzeichnet** auf dem Anzeigemittel dargestellt werden.

7. Verfahren nach einem der vorhergehenden Ansprüche, bei dem die Aufforderung durch das Spracherkennungssystem in akustischer und/oder visueller Form erfolgt.

8. Verfahren nach einem der vorhergehenden Ansprüche, bei dem, wenn eine Anzahl von Hypothesen in der Hypothesenliste einen dritten Wert überschreitet, eine Aufforderung durch das Spracherkennungssystem an den Benutzer erfolgt, die Buchstabierung des zu erkennenden Wortes fortzusetzen.

9. Computerprogrammprodukt, das in einen Arbeitsspeicher einer Programmablaufsteuerungseinrichtung ladbar ist und zumindest einen Codeabschnitt aufweist, bei dessen Ausführung zur Ermittlung einer Hypothesenliste aus einem Vokabular eines Spracherkennungssystems, durch einen Benutzer ein zu erkennendes Wort anbuchstabiert wird und Abstandsmaße für eine Ähnlichkeit zwischen der erkannten Buchstabenfolge und Einträgen des Vokabulars des Spracherkennungssystems ermittelt werden, wobei einer der folgenden Maßnahmen erfolgt,
- wenn Differenzen zwischen einer Anzahl ermittelter Abstandsmaße einen vorgebbaren ersten Wert unterschreiten, eine Aufforderung durch das Spracherkennungssystem an den Benutzer erfolgt, die Buchstabierung des zu erkennenden Wortes fortzusetzen,
- wenn ein vorgebbares Abstandsmaß einen vorgebbaren zweiten Wert überschreitet, eine Aufforderung durch das Spracherkennungssystem an den Benutzer erfolgt, die Anbuchstabierung des zu erkennenden Wortes zu wiederholen,
- wenn Differenzen zwischen einer Anzahl ermittelter Abstandsmaße den vorgebbaren ersten Wert überschreiten und/oder ein vorgebbares Abstandsmaß den vorgebbaren zweiten Wert unterschreitet, eine Hypothesenliste mit den ermittelten Einträgen dem Benutzer auf einem Anzeigemittel zur Auswahl dargestellt wird, wenn das Computerprogrammprodukt in der Programmablaufsteuerungseinrichtung abläuft.
